# EUROPEAN PATENT APPLICATION

(11) **EP 2 213 150 A1**
(43) Date of publication of application: **04.08.2010**
(21) Application number: 09001286.5
(22) Date of filing: 30.01.2009
(51) Int. Cl.: A01B 77/00

(54) **Method and apparatus for eradication of various underground vegetation**

(71) Applicant: Aarhus Universitet, 8000 Aarhus C (DK)
(72) Inventor: Nørremark, Michael, 2300 København S (DK); Melander, Bo, 4230 Skælskør (DK); Kristensen, Erik Fløjggard, 8700 Horsens (DK)
(74) Representative: Boesen, Johnny Peder

(57) **Abstract**

The present invention relates to a method of eradicating various vegetation from soil, said method comprises the steps of:
• separating at least a first fragment from at least a part of said soil, said first fragment comprises larger clods of soil, where vegetation may be comprised in some of said clods of soil;
• decomposing at least a part of said larger clods of soil of said first fragment and separating said first fragment into decomposed elements and non-decomposed elements, whereby at least a part of said vegetation comprised in said clods of soil is released from said clods of soil, and whereby said decomposed elements comprise said released vegetation;
• performing at least one treatment hazardous to vegetation on at least a part of said decomposed elements, thereby at least partly eradicating said vegetation previously comprised in some of said clods of soil.

The present invention further relates to a machine comprising means for performing the method according to the present invention.

## Description

### Field of the invention

The present invention relates to methods of and apparatus for eradication of various vegetation in soil.

### Background of the Invention

The benefits and gain of organic crop production are very often limited due to weed problems. Two weed problems put severe constraints on organic crop production, i) perennial weeds such as *Elymus repens* (L.) Gould, *Cirsium arvense* L. Scop, *Rumex crispus* L. and *Tussilago farfara* L., and ii) crop rotations. The weeds are traditionally controlled by weakening the regenerative underground organs, e.g. root stocks and rhizomes, of the weed and thereby preventing the weed from growing. This is today achieved by repeated treatment of the soil by repeated and prolonged stubble cultivation in late summer and autumn. That strategy conflicts with the objective in organic farming to retain nutrients in the upper soil layer by keeping the soil plant-covered during autumn and winter. Further, special oats are able to extract the root stocks and/or rhizomes from the ground and subsequently position them on the surface of the ground, whereby the weed should be weakened as it is exposed to the sun's UV light and to dry weather conditions. However, research has shown that this kind of oats do not improve the weakening of the weed and that this method is in fact more expensive compared to traditional methods of controlling weed.

W004040958A2 describes a method of treating soil to eradicate viable underground vegetation parts particularly of Japanese knotweed (*Fallopia Japonica*), which method comprises excavating the ground of soil to be treated and grading the soil into a class which is shredded and into a larger class which is ground. The shredding and grinding reduces the size of any underground vegetation parts contained in the soil, and the soil can then be returned to the ground. This method is, even though W004040958 describes that the underground vegetation is not viable, sufficiently efficient when controlling weeds as underground ground weed parts comprised in solid clumps are not destroyed properly, especially when the method is used in clayey soil.

### Brief description of the drawings

In the following, preferred embodiments of the invention will be described referring to the figures, where
figure 1 illustrates a flow diagram of an embodiment of the method according to the present invention;
figure 2 illustrates a flow diagram of another embodiment of the method according to the present invention;
figure 3 illustrates a principle outline of a machine according to the present invention;
figure 4 illustrates a perspective view of the extraction blades and the rotating toothed wheel of the machine illustrated in figure 3;
figure 5a illustrates a perspective view of the first separation mechanism of the machine illustrated in figure 3;
figure 5b illustrates detail A of figure 5a;
figure 6 illustrates a perspective view of the transport, decomposing and second separation mechanism, the transport, and third separation mechanism and transport chain of the machine illustrated in figure 3;
figure 7 illustrates a perspective view of the transverse conveyer and the treating mechanism of the machine illustrated in figure;
figure 8 illustrates a perspective view of the machine illustrated in figure 3.

### Detailed description of embodiments

The present invention solves the problems of the prior art by providing a method and machine of eradication of various vegetation from soil. Soil typically comprises different kinds of elements which can be divided into different fragments defined by the properties of the elements. Soil typically comprises the following fragments:
- A fragment of larger stone;
- A fragment of hard clods of soil;
- A fragment of small stone and clods of soil;
- A fragment of soft and loosely bound soil, in the following called loose soil;
- A fragment of finer elements of soil and stone according to size;
- A fragment of free vegetation not bound in hard clods of soil, hereafter called loose vegetation.

In short, the method and machine obtains the soil from the ground and treats thereafter the soil by first separating the different fractions from each other and thereafter treat the fragments differently in order to improve the eradication of vegetation parts.

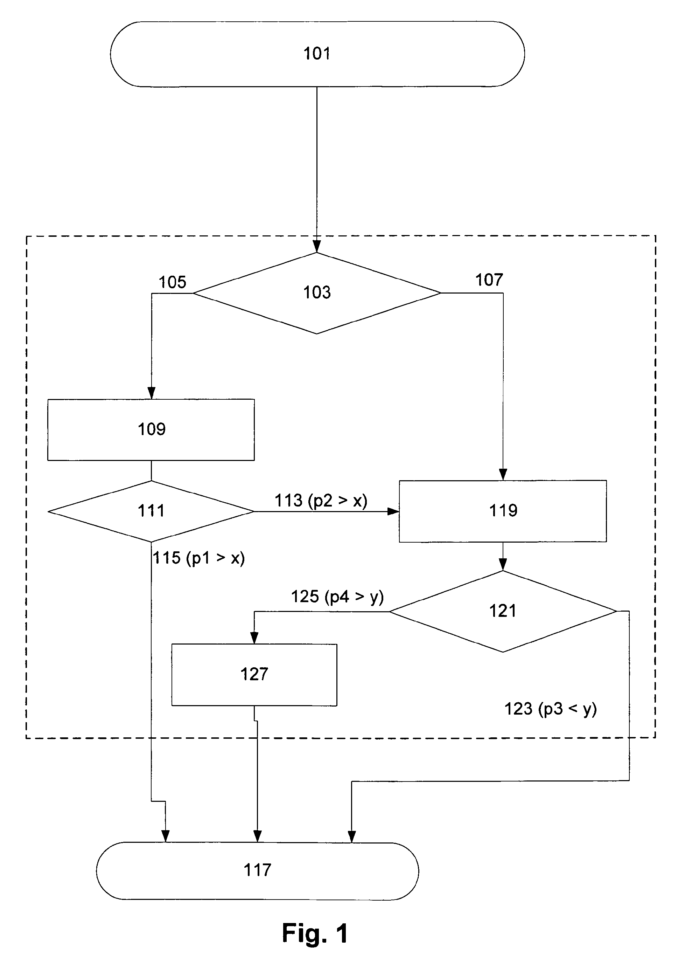

Figure 1 illustrates an embodiment of the method of eradicating various vegetation from soil according to the present invention. Initially in step (101) soil from which the vegetation should be eradicated is obtained, for instance by collecting the upper layer of an agriculture field whereby both soil and vegetation such as roots, rhizomes and stubbles are collected. At least a part of the obtained soil is hereafter in step (103) separated into a first fragment (105) and a second fragment (107). The first fragment (105) comprises the fragments of larger stones and hard clods of soil and the second fragment (105) comprises the fragments of vegetation, small stones and clods of soil and finer soil elements. Hereby large stones and clods of soil are separated from vegetation, small stones and clods of soil and fine soil elements. Then at least some of the elements (clods of soil) of the first fragment are decomposed (109) and the clods of soil would there be decomposed into smaller elements, and eventually vegetation stocked inside the clods would be released. The first fragment is hereafter separated (111) into a decomposed fragment (113) comprising the decomposed elements and non-decomposed fragment (115) comprising the non-decomposed elements such as the larger stones and very hard clods of soil from the first fragment. The decomposed fragment would therefore comprise smaller and fine soil elements and vegetation hidden inside the decomposed clods of soil. The decomposed and non-decomposed elements of the first fragment could for instance be separated according to their size such that the element size (p1) of the elements of the decomposed fragment is larger than the given size x, and the element size (p2) of the elements of the decomposed fragment is smaller than the given size x. The decomposed fragment would, if the size x is chosen to be larger than the size of vegetation, only comprise large stones and very hard clods of soil, and vegetation is thus eradicated from the non-decomposed fragment, and the non-decomposed fragment is then returned (117) to the ground. The first fragment could, however, be separated into a decomposed fragment and a non-decomposed fragment in a similar way as the soil was separated into a first fragment and a second fragment in step (103).

The decomposed fragment comprising decomposed soil and vegetation previously hidden inside clods of soil is then added (119) to the second fragment. The fragment of fine elements (123) is hereafter separated (121) from the remaning elements of said second fragment. The remaning elements of the second fragment would then comprise the fragment of vegetation and the fragment of small stones and small clods of soil. This separation (121) could for instance be performed according to the size of the elements of the second fragment such that the element size (p3) of the fine elements (123) is smaller than a given size y, and such that the element size (p4) of the remaining elements (125) of the second fragment is larger than the given size y. The vegetation would be eradicated from the fine elements if the size y is so small that vegetation smaller than size y would eventually not be able to grow and the fine elements could then by returned to the ground (117). The remaining elements (125) are then treated (125) with a treatment hazardous to the vegetation and the vegetation comprised in the second fragment is then eradicated. Such hazardous treatment of the vegetation could for instance be grinding, shedding, cutting, compressing, boiling, burning, freezing or gathering of the remaining elements of the second fragment or any kind of chemical treatments, and the remaining elements could then be returned to the ground by spreading (117). A person skilled in the art would realize that the step of separating (121) the second fragment and treating (127) the remaning part of the second fragment could be performed on both the second fragment (107) and the decomposed fragment (113) separately rather than adding the decomposed fragment to the second fragment in step (119).

Hereby a very efficient method of eradication of various vegetation from soil is provided. The method would ensure that a very large part of the vegetation would be eradicated as stubbles, root stocks and rhizomes would be released from the soil and eradicated. Furthermore, even vegetation stocked within clods of soil would be eradicated as the clods of soil are decomposed into fine elements, and as a consequence the soil is further decomposed into fine elements which are very suitable for planting crops.

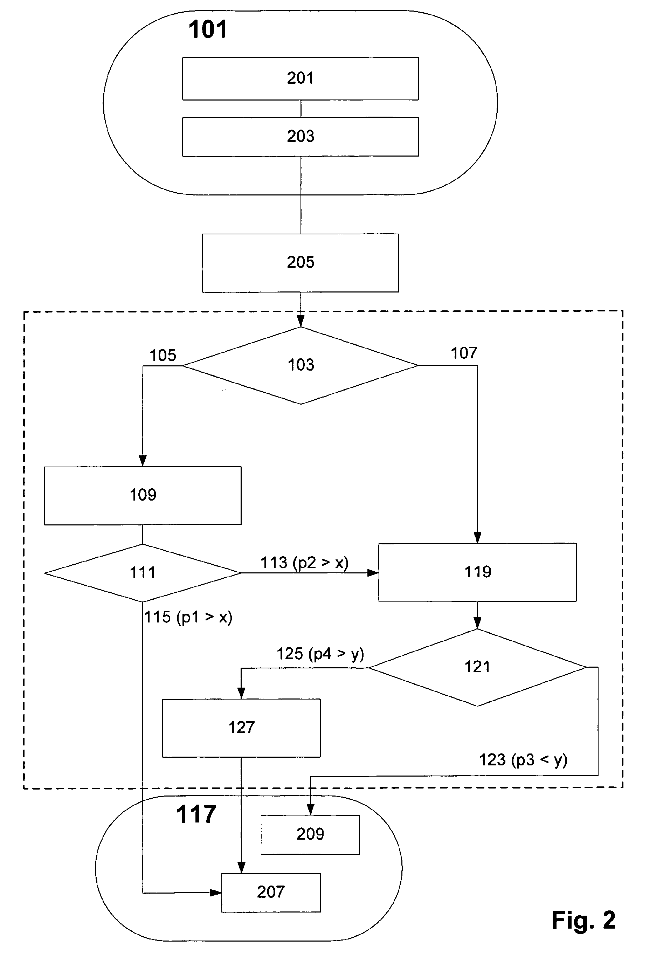

Figure 2 illustrates a flow diagram of another embodiment of the method according to the present invention, where further steps have been added to the method illustrated in figure 1. The initial step (101) of obtaining the soil comprises in this embodiment the steps of loosening (201) and extracting (203) soil and vegetation from the ground. This could for instance be carried out by mechanical means such as a ridge tine cultivator as described below. This method further comprises the step (205) of loosening the obtained soil and vegetation from each other in order to ease the later separations (103) and (121). This step could for instance be carried out by a rotating toothed wheel as described below. The method steps described in figure 1 are hereafter carried out in order to eradicate the vegetation from the soil, however, the step of replacing (117) the different fragments into the ground comprises the step of replacing the non-decomposed fragment and remaning elements of the second fragment lowermost in the ground (207) and replacing the fine elements of the second fragment at the top of the ground (209). The vegetation hereby experiences improved eradication as the loosening of soil and vegetation from each other in step (205) ensures that soil and vegetation is separated even better, and as a consequence most of the vegetation is treated (125) with the treatment hazardous to the vegetation. Further, the fine elements are returned to the top of the ground leaving the ground (e.g. agricultural field) ready for seeding of the next crop. The eradicated vegetation parts further act, as they are returned into the ground, as an organic fertilizer to the new crops, and thus increase the production from the field. The eradicated vegetation parts could alternatively be returned to the top of the field whereby they could be further eradicated as they are drying up. The consequence is that the amount of treatments that an agricultural fields need to undergo in order to prepare the field for the next seeding are reduced. The farmer therefore saves both time and production costs, and the field is further better prepared and the production of the field is therefore also increased. The skilled person would realize that the method also could be used to remove tree roots and stumps from a plantation of e.g. conifer. The hard roots and stumps would then be comprised in the non-decomposed fragment and could be returned to the ground as described above, but could also be removed from the non-decomposed fragment e.g. manually or by passing the non-decomposed fragment through water such that roots and stumps would flow and stone and hard clods of soil would sink.

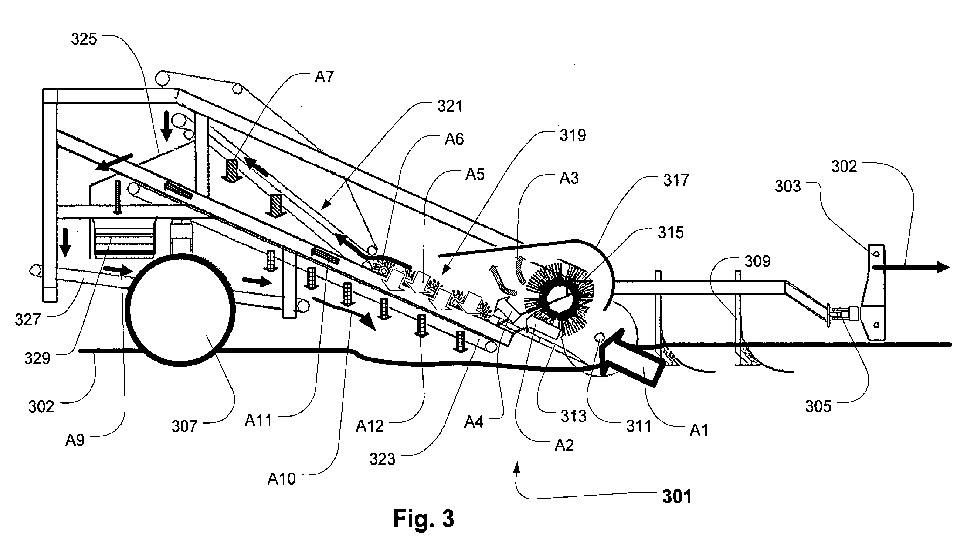

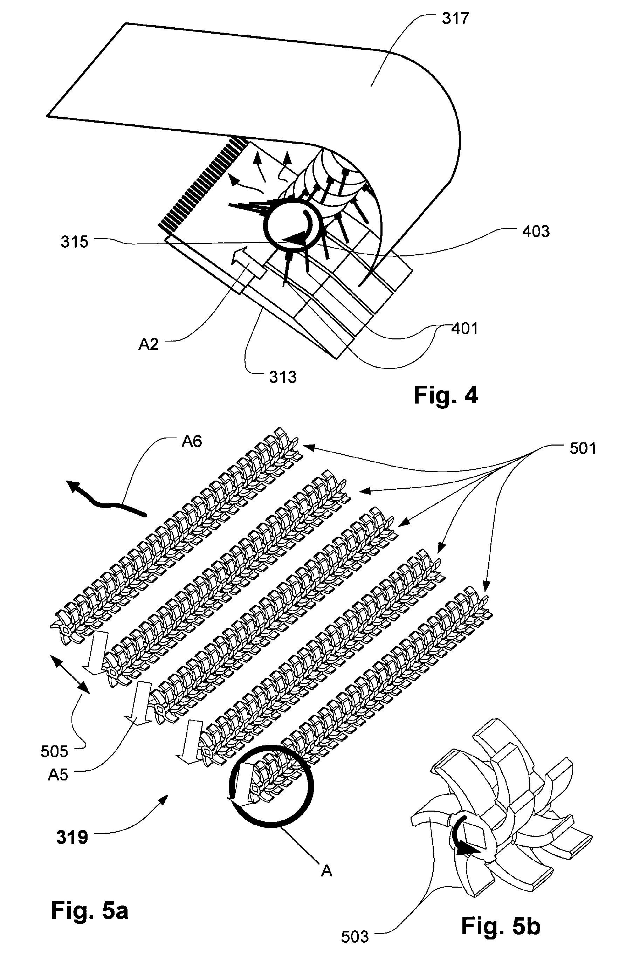

Figure 3 illustrates an outline of a machine according to the present invention. The illustrated machine is capable of eradicating vegetation from an agricultural field (302) by carrying out the steps of the methods illustrated in figures 1 and 2. The machine is embodied as a PTO- (Power Take Off) and/or fully hydraulic driven field conditioning machine (301) adapted to be driven and pulled in the direction indicated by arrow (302) by a tractor (not shown). The machine comprises mounting means (303) adapted to mounting the machine to the hitch and PTO-system of the tractor. The machine further comprises side displacement means (305) and a pair of controllable support wheels (307) which enable sideways and height displacement of the machine, whereby it is possible to control and ensure that adjacent treatments of the field are properly joined. This could for instance be achieved by using real time kinematic GPS (RTK-GPS) and auto control of the sideways displacement of the machine in order to ensure that the two parallel treatments have a very precise overlap. The machine comprises a cultivator (309) adapted to loosen the upper part of the ground which corresponds to step (201) of the method illustrated in figure 2. The cultivator is embodied as a rigid tine cultivator comprising a number of teeth with duck foot shovels that would loosen the upper part of the ground into a depth of approximately 20 cm. A person skilled in the art would realize that the teeth of the ridge tine cultivator could have various forms and comprise shovels having various forms depending e.g. on the purpose of the cultivator and type of soil. Two disc formed blades (311) positioned at the edge of the machine would outline the working area of the machine in the width, and a number of extraction blades (313) positioned between the two disc blades would cut and collect the upper part of the soil as illustrated by arrow (A1) from the ground when the machine is pulled. The disc wheels would further cut soil and vegetation in order to avoid that soil and vegetation are pulled along the side of the machine. The extraction blades therefore perform step (203) of the method in figure 2. The soil is thereafter led across (A2) the extraction blades where it passes a rotating toothed wheel (315) which catches vegetation parts from the extracted soil and throw/slings (A3) the vegetation parts against a screen (317), whereby soil would be loosened from the vegetation parts (step (205) of the method illustrated in figure 2). The rotating toothed wheel (315) could be embodied as a cylinder comprising a number of spring teeth as illustrated in figure 4. Then both soil and vegetation parts are led (A4) to a first separation mechanism (319) which would separate the soil into a first fragment comprising large stones and clods of soil and a second fragment comprising loose vegetation parts and soft, small and middle sized soil elements (step (103) of the method illustrated in figures 1 and 2). The first separation mechanism is embodied as a number of star rollers comprising a number of curved rubber teeth that would decompose the soft soil elements and pull out loose vegetation from the soil and as a consequence loose vegetation and soft, small and middle sized soil elements would pass through (A5), the star rollers and hard and larger clods of soil and stones would be moved (A6) over the star rollers to a transport, decomposing and second separation mechanism (321), while middle and small sized soil elements and vegetation parts constituting the second fragment would pass through the star rollers and end at a transport and third separating mechanism (323).

The large stones and clods of soil subsequently enter the transport, crushing and second separation mechanism (321) where clods of soil are decomposed and the decomposed elements would fall (A7) down and end up at the third separation mechanism (323). The transport, decomposing and second separation mechanism (321) thus performs steps (109), (111) and (119) of the method illustrated in figures 1 and 2. Non-decomposed elements such as stones and very hard clods of soil end up (A8) at a transport chute (325) which transports the non-decomposed elements to a transport chain (327) transporting (A9) the non-decomposed elements underneath the machine (301), where they are returned (A10) to the ground (step (117) and/or step (207). The transport chain runs at high speed causing the decomposed elements to be thrown under the machine as illustrated by arrow (A10).

As described above, loose vegetation and soft, middle and small sized soil parts pass (A5) through the first separating mechanism (319) and end at the transport and third separating mechanism (323). The transport and third separating mechanism is adapted to transport (A11) middle sized soil elements and loose vegetation parts to a transverse conveyer (329), while small/fine elements are separated from the second fragment (step (121) of the method in figures 1 and 2). The transport and third separated mechanism is embodied as a conveyer comprising a rotating web with mesh sizes that allow small/fine elements to fall (A12) through the web and onto ground. Middle sized elements and vegetation parts would then be transported (A11) to the transverse conveyer (329) which transports them (not shown) to a treatment mechanism (not shown) positioned at the side of the machine (301). The treatment mechanism treats (step (127) of the method in figures 1 and 2) the remaining part of the second fragment with a treatment hazardous to vegetation. The treatment mechanism could for instance be embodied as a mill that would grind the vegetation in order to prevent the vegetation from growing as grinded vegetation would not be able to grow. The treatment mechanism could further be a mechanism adapted to shed, boil, burn, crush, compressing, boiling, burning, freezing or gathering the vegetation, or treat the vegetation with electromagnetic radiation (e.g. Gama rays, infrared light, UV light, or other laser sources), chemicals or ultrasound. The skilled person would realize that combinations of different treatments could also be used.

The treated elements are hereafter returned (step (117) and/or step (207)) to the ground for instance by using a spreading mechanism (not shown), e.g. a rotating disc that would spread the treated elements due to the centrifugal force or by mixing the treated elements with the non-decomposed elements on the transport chain (327).

The machine could further comprise an elevation mechanism (not shown), for instance on said wheels which can elevate the machine up and down such that the working depth of the machine can be adjusted. The elevation mechanism could comprise hydraulic cylinders that can displace the different parts of the machine relative to each other and thereby adjust the working depth of the machine.

Hereby it is achieved that vegetation is eradicated from the upper part of the ground and non-decomposable elements and treated elements would be returned lowermost to the ground as they are spread onto the ground under the machine, and the finer elements would thereafter fall (A12) through the third separating mechanism (323) and be positioned above the non-decomposed elements and the treated elements. The consequence is that the field is ready for seeding after only one treatment with the machine according to the present invention.

Figure 4 illustrates a perspective view of the extraction blades (313) and the rotating toothed wheel (315). The extraction blades (313) would enter the ground and extract the soil from the ground where they cut the soil because they are pulled through the ground. Soil would therefore be "shoveled" across the extraction blades where the teeth (401) of the toothed wheel are sweeping through the soil, and they would thus catch vegetation like a rake. The teeth are in the illustrated embodiment positioned in three rows that are twisted like a helix across the rotating wheel. The amount of load on the rotating wheel is hereby reduced as only a small number of teeth are passing through the soil at a time. However, if the rotating wheel is rotating faster compared to the traveling speed of the soil it could be ensured that complete amount/width of soil is "treated" by the teeth. The rotating wheel rotates in the direction indicated by arrow (403) and vegetation caught by the teeth would be thrown/sling against the screen (317) whereby soft soil elements would be loosened from the vegetation.

Figure 5a illustrates a perspective view of the first separation mechanism (319) of the machine illustrated in figure 3, and figure 5b illustrates detail A of figure 5b. The first separation mechanism is embodied as a clod and vegetation separating mechanism and comprises a number of rotating star rollers (501), each comprising a number of curved rubber teeth (503). The rubber teeth (503) would during rotation interact with the soil above the star rollers and both decompose soft soil elements and pull out loose vegetation from the soil. Soft, smaller and fine soil elements and loose vegetation would therefore pass through (A5) the star rollers, whereas larger hard clods of soil and stones would be separated above the star rollers and pushed across the star rollers as indicated by arrow (A6). The distance between the star rollers could be adjusted as illustrated by arrow (505) such that the size of the elements passing between the star rollers could be adjusted. The larger the distance between two adjacent star rollers, the larger elements are allowed to pass through the separation mechanism. The separation mechanism could alternative to the star rollers comprise a number of spade rollers comprising spade shaped teeth. The skilled person would understand that the teeth could have many different forms and shapes.

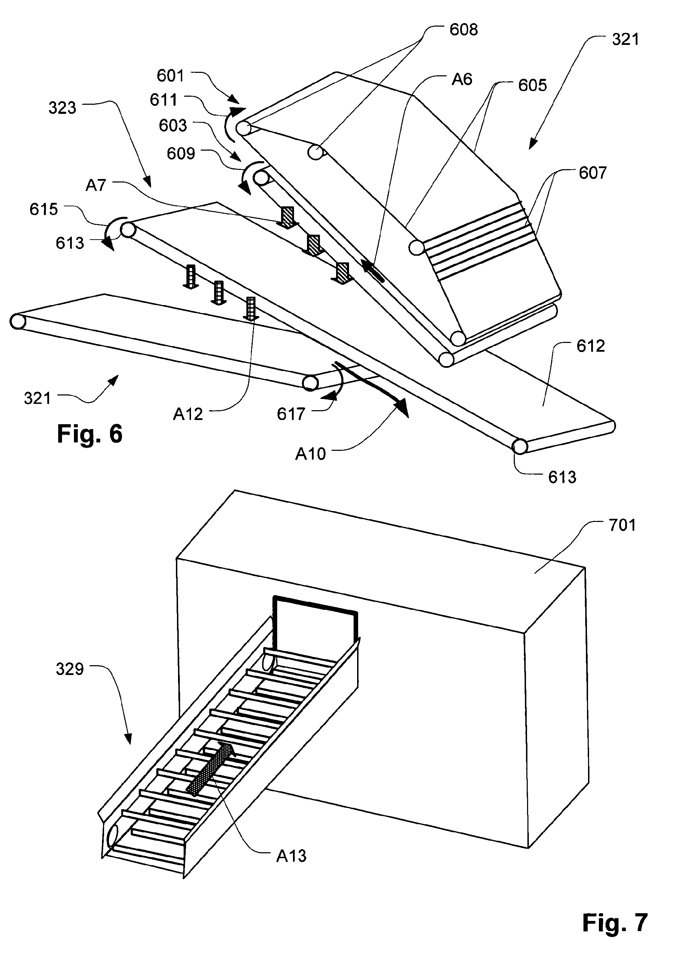

Figure 6 illustrates a perspective view of the transport, decomposing and second separation mechanism (321), the transport and third separation mechanism (323) and transport chain (327).

The transport, decomposing and second separation mechanism (321) comprises an upper decomposing belt (601) and a lower decomposing belt (603). Each decomposing belt comprises two chains (605, 605) connected by a number of transverse lamellas (607) positioned at distance from each other, and the belts are suspended by a number of support members (608). Only a few number of the transverse lamellas are illustrated in the figure, but the skilled person would realize that both the decomposing belts comprise a large number of lamellas. The lower decomposing belt rotates around the support members as illustrated by arrow (609), and the upper decomposing belt rotates as illustrated by arrow (611). The larger stones and clods of soil would be transported (A6) between the lower and upper decomposing belt and the transverse lamellas (607) would interact (push, pull, crush, stroke, fondle, knock, pound) with the larger stones and hard clods of soil, while the stones and clods of soil are transported between the lower and upper decomposing belt. The interaction between the decomposing belts and clods of soil would cause the clods of soil to decompose, and the decomposed elements would due to the distance between the lamellas fall (A7) through the lower decomposing belt and end up at the transport and third separation mechanism (323). The distance between the lamellas therefore defines how big or small elements are allowed to fall down on the transport and third separation mechanism (323). The clods of soil could alternative to the two decomposing belts be decomposed by a crushing or grinding mechanism, where the clods are squeezed, hammered, smashed or cut and thereby decomposed. This could for instance be embodied by transferring the clods of soil onto a conveyer that passes a hammer that bounces up and down on the conveyer and thereby smashes the clods of soil when they pass the hammer.

The transport and third separation mechanism (323) is embodied as a conveyer belt (612) suspended between two support members (613) and rotates in the direction as indicated by arrow (615). The conveyer belt is in the illustrated embodiment carried out as a mesh, and elements having a size smaller than the cells of the mesh would fall through the conveyer belt as illustrated by arrow (A12). The conveyer belt could also, like the decomposing belt, comprise a number of lamellas positioned closer together than at the decomposing belts. Alternative to the rotating mesh a stationary mesh could also be used to separate the elements.

The non-decomposed elements would be transferred from the decomposing mechanism to the transport mechanism (327) via a chute (not shown) as described in figure 3. The transport mechanism (327) could be embodied as a conveyer belt in a similar way as the decomposing belts, the conveyer belt of the transport and separation mechanism (329) and a solid conveyer belt or the like. It would be adapted to rotate as illustrated by arrow (617) at such speed that the stones would be thrown (A10) under the machine.

Figure 7 illustrates a perspective view of the transverse conveyer (329) and the treating mechanism (701) positioned at one side of the machine. The transverse conveyer would transport (A13) the remaining elements of the second fragment to the treating mechanism where elements are treated with a treatment hazardous to the vegetation as described above. The transverse conveyer would receive the remaining elements of the second fragment from the transport and third separating mechanism (323). The treated elements could after treatment either be collected or be returned to the ground. The treatment mechanism could for instance comprise means for transferring the treated elements to the transport mechanism (327) whereby the treated elements are returned into the ground together with the larger stones and very hard clods of soil. Alternatively the treatment mechanism could comprise a spreading mechanism adapted to spread the treated elements onto the ground. The spreading mechanism could for instance be embodied as a rotating disk which would spread the elements due to centrifugal force.

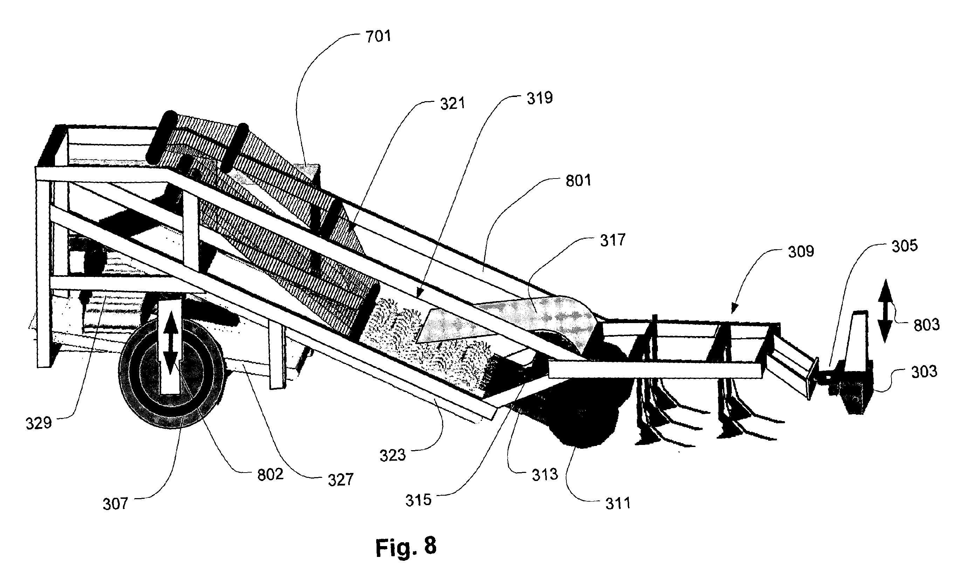

Figure 8 illustrates a perspective view of the machine according to the present invention and illustrates how the above-described parts could be arranged according to each other by using a support frame (801). The illustrated machine are pulled and powered by a tractor, but the skilled person would be able to design and construct a self powered machine capable of powering both the mechanisms for eradicating the vegetation and driving mechanisms. The machine comprises hydraulics that allow the machine to be elevated up and down at the wheels as illustrated by arrow (802), and the machine could further be elevated at the mounting (803) by using the three point linkage of the tractor.

It is to be understood that the illustrated embodiments only serve as illustrating examples rather than limiting the scope of the claims. A person skilled in the art may therefore be able to construct alternative embodiments within the scope of the claims.

## Claims

1. A method of eradicating various vegetation from soil, said method comprises the steps of:
• separating at least a first fragment from at least a part of said soil, said first fragment comprises larger clods of soil, where vegetation may be comprised in some of said clods of soil;
• decomposing at least a part of said larger clods of soil of said first fragment and separating said first fragment into decomposed elements and non-decomposed elements, whereby at least a part of said vegetation comprised in said clods of soil is released from said clods of soil, and whereby said decomposed elements comprise said released vegetation;
• performing at least one treatment hazardous to vegetation on at least a part of said decomposed elements, thereby at least partly eradicating said vegetation previously comprised in some of said clods of soil.

2. A method according to claim 1, wherein said method further comprises the steps of:
• separating at least a second fragment from at least a part of said soil, said second fragment comprises at least partially loose vegetation comprised in said soil;
• performing at least one treatment hazardous to vegetation on at least a part of said second fragment and thereby at least partly eradicating said loose vegetation from said second fragment.

3. A method according to claim 2, wherein said method further comprises the step of:
• adding at least a part of said decomposed elements to said second fragment;
and wherein
• said steps of performing at least one treatment hazardous to vegetation on said decomposed elements and on said second fragment are being performed simultaneously.

4. A method according to claims 2-3, wherein said method further comprises the step of:
• separating finer elements from said second fragment, wherein said finer elements have a smaller size relative to the element size of the remaining elements of said second fragment.

5. A method according to claims 1-4, wherein said method further comprises the step of initially loosening soil.

6. A method according to claims 1-5, wherein said method further comprises the step of:
• obtaining at least a part of said soil from the ground;

7. A method according to claim 6, wherein said method further comprises the step of:
• loosening at least a part of said ground prior to obtaining said soil from the ground.

8. A method according to claims 1-7, wherein said first fragment further comprises larger stones.

9. A method according to claims 1-7, wherein said second fragment further comprises loose soil.

10. A method according to claims 1-10, said method further comprises the step of replacing said non-decomposed elements lowermost on the ground.

11. A method according to claims 1-10, wherein the method according to claims 1-10 are performed continuously while moving on the ground from which said soil is obtained.

12. A machine for eradicating various vegetation from soil, said machine comprises:
• clod separating means for separating at least a first fragment comprising larger clods of soil from at least a part of said soil, where vegetation may eventually be comprised in some of said clods of soil;
• clod decomposing means for decomposing at least a part of said larger clods of soil of said first fragment and second separating means for separating said first fragment into decomposed elements and non-decomposed elements, whereby said vegetation comprised in said clods of soil is released from said clods of soil, and whereby said decomposed elements comprise said released vegetation;
• treating means for performing at least one treatment hazardous to vegetation on at least a part of said decomposed elements, thereby at least partly eradicating said vegetation previously comprised in some of said clods of soil.

13. A machine according to claim 12, wherein said machine further comprises:
• vegetation separating means for separating at least a second fragment comprising at least partially loose vegetation comprised in said soil from at least a part of said soil;
• treating means for performing at least one treatment hazardous to vegetation on at least a part of said second fragment and thereby at least partly eradicating said loose vegetation from said second fragment.

14. A machine according to claim 13, wherein said machine further comprises:
• third separating means for separating finer elements from said second fragment, wherein said finer elements have a smaller size relative to the element size of the remaining elements of said second fragment.

15. A machine according to claims 12-14, wherein said machine further comprises:
• soil loosening means for initially loosening soil from at least a part of said soil.

16. A machine according to claims 12-15, wherein said machine further comprises:
• obtaining means, such as a set of extraction blades, for obtaining at least a part of said soil from the ground.

17. A machine according to claim 16, wherein said machine further comprises:
• ground loosening means, such as ride tine cultivators, initially loosening at least a part of said ground..

18. A machine according to claims 12-17, wherein said clod separating means and/or said vegetation separating means comprise a number of rotating star rollers comprising a number of teeth, said teeth would collect and pass said vegetation between said number of rotating star rollers and said clods of soil would be separated above said star rollers.

19. A machine according to claims 12-18, wherein said clod decomposing means comprise at least one rotating decomposing belt comprising chains connected by a number of lamellas, where said lamellas would interact with said clods of soil and thereby decompose said clods of soil.

20. A machine according to claims 14-19, wherein third separating means comprise a mesh.

21. A machine according to claims 15-20, wherein said soil loosening means for initially loosening said soil comprise a rotating toothed wheel and screen.

22. A machine according to claims 12-21, wherein said machine further comprises a conveyer belt for transporting said non-decomposed elements underneath said machine.
